Europäisches Patentamt

European Patent Office

Office européen des brevets

(19)

(11) Veröffentlichungsnummer: **0 164 503**
**A2**

(12) # EUROPÄISCHE PATENTANMELDUNG

(21) Anmeldenummer: **85102939.7**

(22) Anmeldetag: **14.03.85**

(51) Int. Cl.⁴: **F 16 L 55/02**

(30) Priorität: **16.05.84 CH 2403/84**

(43) Veröffentlichungstag der Anmeldung:
**18.12.85 Patentblatt 85/51**

(84) Benannte Vertragsstaaten:
**BE DE FR GB SE**

(71) Anmelder: **GEBRÜDER SULZER AKTIENGESELLSCHAFT**
**Zürcherstrasse 9**
**CH-8401 Winterthur(CH)**

(72) Erfinder: **Früh, Walter**
**Rychenbergstrasse 363**
**CH-8404 Winterthur(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Mediumführende leitung mit mindestens einer Drosselvorrichtung.**

(57) Die Drosselvorrichtung (2) der Leitung (1), deren Betriebstemperatur von der ausserbetrieblichen Temperatur verschieden ist, ist in der Leitung unter Freilassung eines Spaltes (5) zwischen ihr und der sie umgebenden Leitung (1) mittels eines Stiftes (4) befestigt. Diese Befestigung ist derart, dass der Spalt (5) durch unterschiedliche Temperaturen bedingte Wärmedehnungen zwischen der Drosselvorrichtung (2) und der Leitung (1) aufnimmt.

Hierdurch können keine nennenswerten Wärmespannungen mehr entstehen, wenn die Leitung rasch aus dem kalten Zustand in einen warmen Zustand übergeführt wird.

Fig. 1

0164503

P.5880 Stph

Gebrüder Sulzer Aktiengesellschaft, Winterthur, Schweiz

Mediumführende Leitung mit mindestens einer
Drosselvorrichtung.

Die Erfindung betrifft eine mediumführende Leitung mit
mindestens einer Drosselvorrichtung, wobei die Betriebstemperatur von der ausserbetrieblichen Temperatur verschieden ist.

Es sind solche Leitungen bekannt, bei denen die Drosselvorrichtung spielfrei – zum Beispiel durch Schweissen –
mit der Leitung verbunden ist. Da die Drosselvorrichtung
viel intensiver vom Medium durchströmt wird als der
Verbindungsbereich der Drosselvorrichtung mit der
Leitung, ändert sich bei der Inbetriebnahme der Leitung
die Temperatur im Drosselbereich viel rascher als im
erwähnten Verbindungsbereich. Folglich weist dabei die
Drosselvorrichtung eine grössere Wärmedehnung oder
-schrumpfung auf als die sie umgebende Leitung, wodurch
Wärmespannungen entstehen, die bei grossen Differenzen
zwischen Betriebstemperatur und ausserbetrieblicher

Temperatur beachtlich sein können. Die Unterschiede in der Geometrie zwischen der Drosselvorrichtung und der der Leitung wirken meistens im Sinne einer Vergrösserung der Wärmedehnungsdifferenzen und tragen somit dazu bei, die Wärmespannungen noch mehr zu steigern.

Wenn zum Beispiel eine Rohrleitung von 600 mm Durchmesser und 30 mm Wanddicke, die als Drosselvorrichtung eine 60 mm dicke Lochscheibe enthält, im kalten Zustand innen mit Dampf von 570°C beaufschlagt wird, weisen - eine Minute nach Beginn der Dampfbeaufschlagung - die Lochscheibe eine Temperatur von 570°C und ihre Verbindung mit der Rohrleitung eine Temperatur von lediglich 170°C auf. Trotz einer gewissen Deformation der Rohrleitung in dem Verbindungsbereich mit der Scheibe erreichen die resultierenden Spannungen Durchschnittswerte von etwa 1000 N/mm$^2$, wobei Spannungsspitzen von 2 bis 4 mal dieses Wertes auftreten können.

Aehnliche Wirkungen lassen sich feststellen, wenn beispielsweise die Leitung ein Kälte-Medium führt und aussen von einem anderen, heissen Medium angeströmt wird, was bei Wärmeübertragern häufig der Fall ist.

In Anlagen, die auf zyklische Weise betrieben werden - wie dies bei Spitzenlastkraftwerken der Fall ist, die unter Umständen mehrmals täglich angefahren und abgestellt werden - tritt zusätzlich eine Ermüdung des Leitungsmaterials auf, der durch eine mit erheblichen Kosten verbundene besondere Gestaltung der Rohrleitungen und/oder häufigen Kontrollen und Substitutionen begegnet werden muss. Eine andere bekannte Methode, mit diesem Problem fertig zu werden, ist ein Vorwärmen des Verbindungsbereiches, was aus zeitlichen Gründen nicht immer realisierbar ist und überdies mit einem grossen Aufwand verbunden ist.

0164503

- 3 -

Es ist daher Aufgabe der Erfindung, bei mediumführenden Leitungen der eingangs genannten Gattung auf einfache, kostengünstige Art einen wärmespannungsarmen raschen Uebergang vom ausserbetrieblichen Zustand zum Betriebszustand zu ermöglichen.

Diese Aufgabe wird erfindungsgemäss dadurch gelöst, dass die Drosselvorrichtung in der Leitung unter Freilassung eines Spaltes zwischen ihr und der sie umgebenden Leitung derart befestigt ist, dass der Spalt durch unterschiedliche Temperaturen bedingte Wärmedehnungen zwischen der Drosselvorrichtung und der Leitung aufnimmt.

Durch diese Gestaltung der Verbindung zwischen der Leitung und der Drosselvorrichtung werden Wärmedehnungen bzw. -schrumpfungen der Drosselvorrichtung nicht mehr auf die Leitung übertragen. Ausserdem bewirkt bei einer Temperaturänderung, die durch das Medium im Innern der Leitung verursacht wird, das durch den Spalt fliessende Medium ein rasches Angleichen der Temperaturen in den an den Spalt angrenzenden Bereichen an die Temperatur des Mediums. Weitere Vorteile der Erfindung sind in der konstruktiven Einfachheit der Befestigung zu sehen, wodurch sie kostengünstig verwirklicht werden kann. Ihre Verwertbarkeit erstreckt sich auf bereits bestehende Leitungen, die mit wenig Aufwand mit der erfindungsgemässen Anordnung versehen werden können.

Eine konstruktiv günstige Möglichkeit für die Befestigung der Drosselvorrichtung ist im Anspruch 2 angegeben.

Anspruch 3 ermöglicht auf einfache Weise eine zuverlässige Zentrierung der Drosselvorrichtung in der Leitung, wobei ihre einfache Montierbarkeit von zusätzlichem Vorteil ist.

Eine vorteilhafte Anordnung der Drosselvorrichtung kennzeichnet der Anspruch 4.

Die Auslegung gemäss Anspruch 5 sichert eine besonders grosse Spannungsfreiheit während der Inbetriebnahme der Leitung.

Die Ausführungsform gemäss den Ansprüchen 6 und 7 sind ausgesprochen übersichtlich und begünstigen eine zuverlässige Vorausberechnung des Drosselverhaltens.

Eine weitere vorteilhafte Ausführungsform der Erfindung ist im Anspruch 8 gekennzeichnet.

Die Verbesserung der Gleiteigenschaften der aufeinandergleitenden Flächen nach Anspruch 9 stellt eine zusätzliche Spannungsverminderung dar, wobei Anspruch 10 eine einfache Verwirklichung dieser Verbesserung enthält.

Ein Ausführungsbeispiel der Erfindung wird anhand der Zeichnung näher erläutert. Es zeigen:

Fig. 1     schematisch und teilweise im Längsschnitt eine Leitung mit einer als Lochscheibe ausgebildeten Drosselvorrichtung,

Fig. 2     ebenfalls schematisch einen Querschnitt entlang der Schnittlinie II - II der Fig. 1 und

Fig. 3     ein Detail in vergrössertem Massstab gemäss der Schnittlinie III - III in Fig. 2.

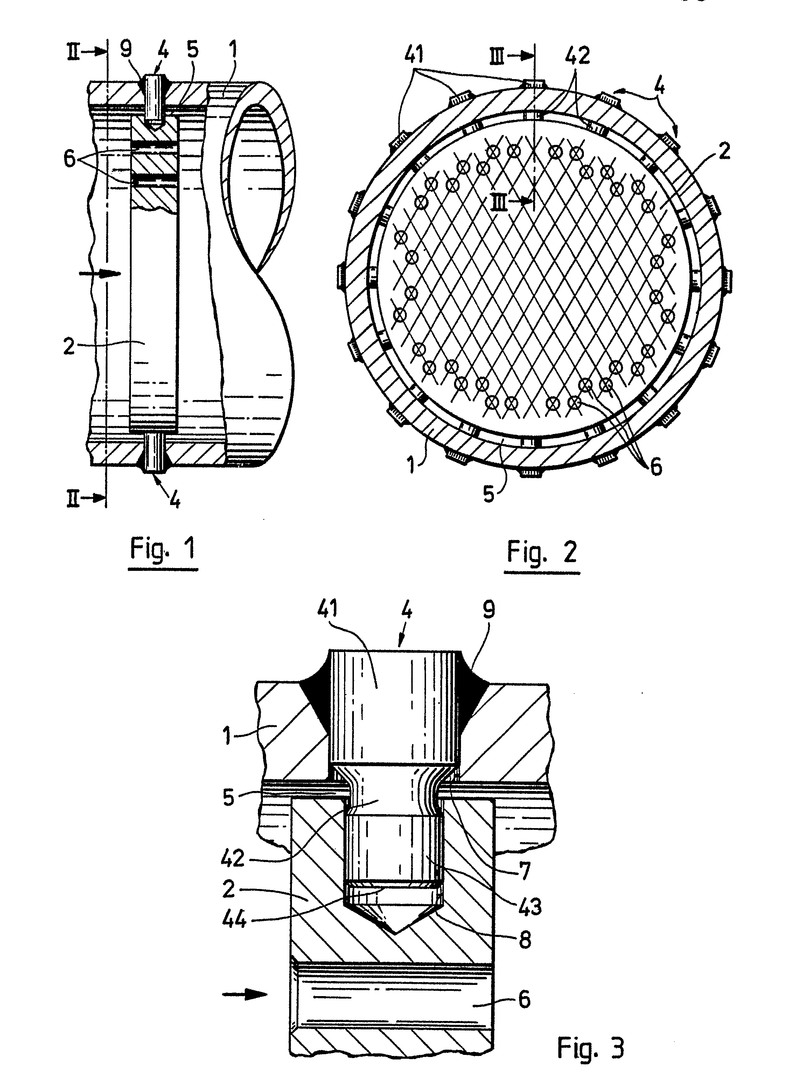

Nach Fig. 1 und 2 enthält eine einen kreisförmigen Querschnitt aufweisende, dampfführende Rohrleitung 1 eine Drosselvorrichtung 2 in Form einer Lochscheibe.

Die Scheibe 2 enthält eine Anzahl parallel zur Längsachse der Rohrleitung 1 verlaufender, zylindrischer Kanäle 6, die jeweils auf den Kreuzungspunkten des in Fig. 2 eingezeichneten Strichgitters liegen. Sie ist mit Hilfe von sechzehn Stiften 4 an der Rohrleitung 1 befestigt. Zwischen dem Umfang der Lochscheibe 2 und der inneren Oberfläche der Rohrleitung 1 verläuft ein Spalt 5 von gleichmässiger Breite. Jeder Stift 4 steckt fest in einer im wesentlichen senkrecht zur Längsachse der Rohrleitung 1 verlaufenden Bohrung 7 in der Wand der Leitung (Fig. 3), durchdringt den Spalt 5 und ragt in eine Bohrung 8, die radial am Umfang der Scheibe 2 angebracht ist. Im Bereich der Bohrung 7 weist jeder Stift 4 einen äusseren Abschnitt 41 auf, der mittels einer Schweissnaht 9 den Stift 4 mit der Rohrleitung 1 dicht verbindet. An den Abschnitt 41 jedes Stiftes 4 schliesst sich ein mittlerer Abschnitt 42 an und an diesen ein innerer Abschnitt 43. Der mittlere Abschnitt 42, der sich im Bereich des Spaltes 5 erstreckt, ist gegenüber den Abschnitten 41 und 43 eingeschnürt. Der äussere Abschnitt 41 und der innere Abschnitt 43 weisen je die Form eines Zylinders auf. Die Mantelfläche des inneren, in der Bohrung 8 gleitenden Abschnittes 43 ist von einem gute Gleiteigenschaften aufweisenden Material gebildet, das z.B. durch ein Plasmaverfahren aufgebracht wird und aus 75% $Cr_3C_2$ und 25% einer NiCr-Legierung besteht. Die Bohrung 8 ist länger als der Abschnitt 43, und der Stift 4 ist so bemessen, dass zwischen dem Ende 44 des Abschnittes 43 und dem benachbarten, geschlossenen Ende der Bohrung 8 ein Abstand vorhanden ist, so dass - bei unterschiedlichen Temperaturverläufen der Rohrleitung 1 und der Drosselvorrichtung 2 - diese sich unabhängig von der Leitung unter Vergrösserung oder Verkleinerung des Spaltes 5 dehnen kann. Die Drosselvorrichtung 2 ist

durch die sechzehn Stifte 4 eindeutig innerhalb der Rohrleitung 1 positioniert, da jede Kraft, die in Längsrichtung der Rohrleitung 1 wirkt, von den Stiften 4 aufgefangen wird und jede zur Rohrleitung 1 radiale Kraft von all denjenigen Stiften abgefangen wird, die nicht in Richtung dieser radialen Kraft verlaufen.

Befindet sich die zunächst leere Rohrleitung 1 im kalten Zustand - angenommen 20$^{\circ}$C - und wird sie dann plötzlich von Dampf mit zum Beispiel 600$^{\circ}$C Temperatur durchströmt, so erwärmt sich das Material in der unmittelbaren Umgebung der intensiv durchströmten Kanäle 6 sehr rasch auf, und die Drosselvorrichtung 2 weist, weil die Kanäle 6 sehr nah beieinander liegen, in etwa einer Minute bereits die erwähnte Temperatur von 600$^{\circ}$C auf. Die Rohrleitung 1 hat jedoch - vorallem infolge niedrigerer Dampfgeschwindigkeiten in Wandnähe - schlechtere Wärmeübertragungskoeffizienten als die Drosselvorrichtung 2 und erwärmt sich infolgedessen wesentlich langsamer als diese, so dass anfänglich die Wärmedehnung der Drosselvorrichtung 2 bedeutend grösser als diejenige der Rohrleitung 1 ist. Diese Differenz wird zusätzlich durch die Tatsache verstärkt, dass die Rohrleitung 1 zylindrisch ist und daher eine radiale Komponente ihrer Wärmedehnung aufweist, die kleiner als die radiale Komponente der Wärmedehnung der scheibenförmigen Drosselvorrichtung 2 ist. Es entstehen aber keine Wärmespannungen zwischen der Rohrleitung 1 und der Drosselvorrichtung 2, weil die letztgenannte sich ungehindert in alle Richtungen dehnen kann, wobei die Bohrung 8 entlang des inneren Abschnittes 43 eines jeden Stiftes 4 - den Spalt 5 verkleinernd - gleitet. Der Spalt 5 wird dabei so ausgelegt, dass er grösser als die Hälfte der radialen Wärmedehnung der Drosselvorrichtung 2 bei der grössten zu erwartenden Temperatur des Dampfes ist. Die

Dampfströmung durch den Spalt 5 beschleunigt den Temperaturausgleich zwischen der Drosselvorrichtung 2, dem Stift 4 und der Rohrleitung 1 und verhindert somit, dass unzulässige Spiele zwischen dem Abschnitt 43 und der Bohrung 8 auftreten. Beim Auslegen der Drosselvorrichtung 2 wird man also die Auswirkung des Spaltes 5 auf den Verbindungsbereich berücksichtigen.

Abweichend von der beschriebenen Ausführungsform kann die Leitung 1 auch - zumindest im Verbindungsbereich - konisch gestaltet sein; ferner kann sie rechteckigen oder dreieckigen Querschnitt aufweisen. Obwohl es herstellungsmässig einfacher ist, die Stifte 4 mit der Rohrleitung 1 fest und mit der Drosselvorrichtung 2 gleitbar zu verbinden, ist eine Umkehrung dieser Verbindungsart möglich, das heisst, dass die Stifte 4 in der Wand der Rohrleitung 1 gleiten können und mit der Drosselvorrichtung fest verbunden sind. Die Stifte 4 können auch in der Wand der Rohrleitung 1 angeordnet sein, ohne diese zu durchstossen. Bei nicht allzu hohen oder allzu tiefen Betriebstemperaturen ist es sogar möglich, die Montage und Demontage dadurch zu erleichtern, dass an Stelle der Schweissnähte 9 die Stifte 4 in nichtdurchgehende Bohrungen in der Wand der Rohrleitung 1 gleitend eingesteckt werden und mittels Federn gehalten werden, die in der Drosselvorrichtung 2 jeweils zwischen das geschlossene Ende der Bohrung 8 und dem freien Ende 44 des inneren Abschnittes 43 eingelegt werden. In diesem Falle besteht also eine gleitbare Verbindung jedes Stiftes sowohl mit der Leitung 1 als auch mit der Drosselvorrichtung 2. Die Stifte 4 können auch mit der Leitung oder der Drosselvorrichtung 2 verschraubt sein, eventuell mit Hilfe von Gegenmuttern. Die Anzahl der Stifte 4 hängt von ihrer Grösse und von den in Frage kommenden Kräften ab. Die Drosselvorrichtung 2 kann auch anstelle der Kanäle 6 einen einzigen Kanal enthalten. Der Kanal oder die Kanäle kann bzw. können die Form von Venturi-Düsen aufweisen. Die Vorrichtung 2 kann eine Länge aufweisen, die viel grösser als ihr Durchmesser ist, wobei mindestens zwei Reihen von Stiften 4 vorgesehen werden können, die hintereinander in der Längsrichtung der Rohrleitung 1 angeordnet sind. Die Drosselvorrichtung 2 kann auch entlang eines Teils ihres Umfanges in einer Nut am inneren Umfang der Rohrleitung 1 gehalten und diametral gegenüber dieser Nut mit einem einzigen Stift 14 befestigt sein.

Wie bereits erwähnt, ist die Erfindung auch bei Leitungen anwendbar, die Kältemittel führen; ebenso bei Leitungen, die von innen gekühlt und von aussen erwärmt werden, oder umgekehrt.

Gebrüder Sulzer AG        — 9 —        P.5880 Stph

Patentansprüche

1. Mediumführende Leitung mit mindestens einer Drosselvorrichtung, wobei die Betriebstemperatur von der ausserbetrieblichen Temperatur verschieden ist, dadurch g e k e n n z e i c h n e t, dass die Drosselvorrichtung in der Leitung unter Freilassung eines Spaltes zwischen ihr und der sie umgebenden Leitung derart befestigt ist, dass der Spalt durch unterschiedliche Temperaturen bedingte Wärmedehnungen zwischen der Drosselvorrichtung und der Leitung aufnimmt.

2. Leitung nach Anspruch 1, dadurch gekennzeichnet, dass zur Befestigung der Drosselvorrichtung mindestens ein sich quer zur Längsrichtung der Leitung erstreckender Stift vorgesehen ist, der relativ zu mindestens einem der durch ihn verbundenen Teile (Leitung oder Drosselvorrichtung) gleitbar ist.

3. Leitung nach Anspruch 2, dadurch gekennzeichnet, dass mehrere, über den Umfang der Leitung verteilte Stifte vorgesehen und mit der Leitung fest verbunden sind, während sie in der Drosselvorrichtung in der Längsrichtung des Stiftes gleitbar angeordnet sind.

4. Leitung nach Anspruch 1 oder 2, dadurch gekennzeichnet, dass die den Spalt begrenzenden Umfangsflächen der Leitung und der Drosselvorrichtung zueinander parallel verlaufen.

5. Leitung nach einem der Ansprüche 1 bis 4, dadurch gekennzeichnet, dass die minimale Breite des Spaltes mindestens gleich der halben, beim Uebergang von der ausserbetrieblichen Temperatur zur Betriebstemperatur, in der Längsrichtung des Stiftes auftretenden Aenderung der Ausdehnung der Drosselvorrichtung ist.

6. Leitung nach einem der Ansprüche 1 bis 5, dadurch gekennzeichnet, dass die Leitung im Bereich der Drosselvorrichtung einen konstanten, kreisförmigen Querschnitt aufweist.

7. Leitung nach einem der Ansprüche 1 bis 5, dadurch gekennzeichnet, dass die Leitung im Bereich der Drosselvorrichtung in Längsrichtung konisch ausgebildet ist.

8. Leitung nach einem der Ansprüche 1 bis 7, dadurch gekennzeichnet, dass die Drosselvorrichtung als Lochscheibe ausgebildet ist.

9. Leitung nach einem der Ansprüche 1 bis 8, dadurch gekennzeichnet, dass mindestens eine der einander berührenden Gleitflächen aus einem aufgetragenen, gute Gleiteigenschaften aufweisenden Material besteht.

10. Leitung nach einem der Ansprüche 2 bis 9, dadurch gekennzeichnet, dass der Stift zum Bilden der Gleitfläche mit einem Material überzogen ist, das aus 75% $Cr_3C_2$ und 25% einer NiCr-Legierung besteht.

0164503

Fig. 1

Fig. 2

Fig. 3